# EUROPÄISCHE PATENTSCHRIFT

(11) **EP 4 127 498 B1**
(45) Veröffentlichungstag und Bekanntmachung des Hinweises auf die Patenterteilung: **15.11.2023**
(21) Anmeldenummer: 21704702.6
(22) Anmeldetag: 29.01.2021
(51) Int. Cl.: F16C 19/30, F16C 19/38, F16C 41/00

(54) **WÄLZLAGER, INSBESONDERE DREHVERBINDUNG**
ROLLER BEARING, ESPECIALLY OF ROTARY CONNECTION
PALIER À ROULEMENT, EN PARTICULIER DE CONNECTION TOURNANTE

(30) Priorität: 02.04.2020 DE 102020109150
(43) Veröffentlichungstag der Anmeldung: 08.02.2023
(73) Patentinhaber: Schaeffler Technologies AG & Co. KG, 91074 Herzogenaurach (DE)
(72) Erfinder: JUNGINGER, Uwe, 91217 Hersbruck (DE); KREUZER, Meik, 97688 Bad Kissingen (DE)
(86) Internationale Anmeldenummer: PCT/DE2021/100085
(87) Internationale Veröffentlichungsnummer: WO 2021/197528

(56) Entgegenhaltungen:
- DE-A1-102006 055 581
- DE-A1-102007 003 970
- DE-A1-102013 207 783
- JP-A- H0 320 114

## Beschreibung

### Gebiet der Erfindung

Die Erfindung betrifft ein Wälzlager nach den oberbegriffsbildenden Merkmalen des Patentanspruchs 1, welches insbesondere vorteilhaft als Drehverbindung an Deckenstativen im medizinischen Bereich anwendbar ist.

### Hintergrund der Erfindung

Deckenstative, wie beispielsweise Deckenversorgungseinheiten, Monitorträger, so genannte Federarme oder Zentralachsen in einem Operationssaal oder auf einer Intensivstation, weisen meist einen oder mehrere in Bezug auf eine Vertikalposition starr angeordnete oder höhenverstellbare Träger auf, mittels welchen eine daran befestigte medizintechnische Einrichtung bewegt und positioniert werden kann. An den Deckenstativen sind häufig Versorgungseinheiten montiert, mit denen medizinisch-elektrische Endgeräte mit den z.B. während einer Operation benötigten Medien versorgt werden können. Die Träger definieren dabei einen Aktionsradius der medizintechnischen Einrichtung, in welchem die medizintechnische Einrichtung positioniert ist. Die Träger können meist um mindestens eine Drehverbindung, insbesondere ein Wälzlager, verdreht werden. Wahlweise sind die Träger auch höhenverstellbar und/oder um eine zumindest annähernd horizontal ausgerichtete Achse in der Höhe verschwenkbar angeordnet. Eine Drehbewegung einzelner Träger, sei es eine absolute Drehbewegung oder eine Drehbewegung relativ zu einem anderen Träger, soll in vielen Fällen auf einen vorgegebenen Winkel begrenzt werden. Hierdurch kann z.B. vermieden werden, dass ein Träger um mehr als einen maximal zulässigen Winkel gegenüber einem anderen Träger verdreht wird und dadurch im Träger geführte Leitungen verdrillt, eingequetscht oder sogar abgerissen werden. Eine Drehwinkelbegrenzung kann z.B. in Form eines Anschlags bereitgestellt werden, an welchem ein Träger bei einem bestimmten Verdrehwinkel anschlägt.

Eine solche Drehwinkelbegrenzung kann zwar sicherstellen, dass ein maximaler Drehwinkel nicht überschritten wird, hat aber in den meisten Ausführungen auch den Nachteil, dass nur ein Verdrehwinkel von maximal 360° realisierbar ist und die Bewegungsfreiheit des Deckenstativs somit eingeschränkt wird. Soll ein Verdrehwinkel von etwa 400° realisiert werden, muss das Deckenstativ ausgehend von einer 360° Position über einen Verdrehwinkel von 320° aufwändig zurückgedreht werden.

Ein zur Verwendung in einem Deckenstativ als Drehverbindung geeignetes Wälzlager mit einem Anschlagmittel zur Drehwinkelbegrenzung über 360° hinaus ist beispielsweise aus der DE 10 2006 055 581 A1 bekannt. Dieses Wälzlager besteht aus einem inneren Lagerring, einem äußeren Lagerring und einer Vielzahl von Wälzkörpern, die zwischen den Lagerringen auf inneren und äußeren Laufbahnen abrollen, wobei innerhalb des Wälzlagers eine Drehwinkelbegrenzungseinrichtung angeordnet ist, die das gegenseitige Verdrehen des inneren Lagerrings gegenüber dem äußeren Lagerring innerhalb eines Drehwinkelbereiches von 0° bis >360° begrenzt und ein am inneren Lagerring angeordnetes erstes Anschlagelement sowie ein am äußeren Lagerring angeordnetes zweites Anschlagelement umfasst. Die Drehwinkelbegrenzungseinrichtung ist dabei als Kurvensteuerung ausgebildet, die durch eine in einer Seitenfläche des äu-ßeren Lagerrings angeordnete spiralförmige Steuernut als erstes Anschlagelement und einen in einer Langlochnut in einer Seitenfläche des inneren Lagerrings axial beweglichen Anschlagstift als zweites Anschlagelement gebildet wird.

Eine weitere Drehverbindung mit einem Anschlagmittel zur Drehwinkelbegrenzung über 360° ist aus der DE 10 2007 003 970 A1 bekannt. Bei dieser durch ein zweireihiges Schrägrollenlager gebildeten Drehverbindung ist der Lagerau-ßenring an seiner inneren Mantelfläche mit einer in Umfangsrichtung verlaufenden Freistellung versehen, die an ihren beidseitigen Enden durch eine erste Anschlagnase begrenzt ist. Der Lagerinnenring ist an seiner äußeren Mantelfläche mit einer in Umfangsrichtung verlaufenden Führungsnut versehen, die an ihren beidseitigen Enden durch eine zweite Anschlagnase begrenzt ist, wobei in der Führungsnut ein Führungselement angeordnet ist, das beide Lagerringe formschlüssig miteinander verbindet. Der mögliche Drehwinkel setzt sich somit aus einer Addition des Winkelbereiches der Freistellung im Lageraußenring mit dem Winkelbereich der Führungsnut im Lagerinnenring zusammen, sodass dieser maximal 720° abzüglich der Umfangsausdehnung beider Anschlagnasen erreichen kann.

In der DE 10 2013 207 783 A1 ist schließlich noch eine Drehverbindung mit einem Anschlagmittel zur Drehwinkelbegrenzung über 360° offenbart, die ebenfalls als Schrägrollenlager mit zwei Reihen in O-Anordnung zueinander angeordneten Wälzkörpern ausgebildet ist und bei der die Anschlagelemente der Drehwinkelbegrenzungseinrichtung jeweils axial zwischen den inneren beziehungsweise äußeren Laufbahnen der Lagerringe angeordnet sind. Die Anschlagelemente der Drehwinkelbegrenzungseinrichtung werden dabei durch eine spiralförmige Laufbahn mit ein oder zwei in die Laufbahn einschraubbaren Anschlägen sowie durch eine Nase gebildet, welche in die Laufbahn zwischen den Anschlägen hineinragt. Da durch die spiralförmige Ausgestaltung der Laufbahn die bei rein kreisförmigen Laufbahnen bestehenden Beschränkungen entfallen, können somit auch Verdrehwinkel über 360° realisiert werden. In Bezug auf Anspruch 1 offenbart DE 10 2013 207783 A1 ein Wälzlager, bestehend aus einem inneren Lagerring, einem äußeren Lagerring und einer Vielzahl von Wälzkörpern, die zwischen den Lagerringen auf inneren und äußeren Laufbahnen abrollen, sowie mit einer innerhalb des Wälzlagers angeordneten Drehwinkelbegrenzungseinrichtung, die das gegenseitige Verdrehen des inneren Lagerrings gegenüber dem äußeren Lagerring innerhalb eines Drehwinkelbereiches von 0° bis größer 360° begrenzt und zumindest ein am inneren Lagerring angeordnetes erstes Anschlagelement sowie wenigstens ein am äußeren Lagerring angeordnetes zweites Anschlagelement umfasst, wobei das am inneren Lagerring angeordnete erste Anschlagelement der Drehwinkelbegrenzungseinrichtung durch eine Vielzahl in einer Reihe an der Außenmantelfläche des inneren Lagerrings umlaufend nacheinander angeordneter, einzelner Radialgrundbohrungen gebildet wird.

Nachteilig bei den vorgenannten bekannten Drehverbindungen ist es jedoch, dass die Drehwinkelbegrenzungseinrichtungen zur Realisierung von Verdrehwinkeln größer 360° in ihrer Herstellung zumeist sehr aufwändig sind und/oder einen erhöhten Bauraumbedarf aufweisen, der eine weitere Erhöhung der Herstellungskosten verursacht.

### Aufgabe der Erfindung

Ausgehend von den dargelegten Nachteilen der Lösungen des bekannten Standes der Technik liegt der Erfindung deshalb die Aufgabe zu Grunde, ein Wälzlager, insbesondere eine Drehverbindung, zu konzipieren, bei der eine Drehwinkelbegrenzung größer 360° mit einfachen und bauraumsparenden Mitteln bei gleichzeitig niedrigen Herstellungskosten möglich ist.

### Beschreibung der Erfindung

Erfindungsgemäß wird diese Aufgabe bei einem Wälzlager nach dem Oberbegriff des Anspruchs 1 derart gelöst, dass das am inneren Lagerring angeordnete erste Anschlagelement der Drehwinkelbegrenzungseinrichtung durch eine Vielzahl in einer Reihe an der Außenmantelfläche des inneren Lagerrings umlaufend nacheinander angeordneter, einzelner Radialgrundbohrungen sowie durch zumindest eine zwischen einer ersten Radialgrundbohrung und einer letzten Radialgrundbohrung angeordnete, langlochartige Radialgrundnut gebildet wird, wobei in die Radialgrundbohrungen oder die Radialgrundnut je nach Größe des zu begrenzenden Drehwinkels ein oder zwei die Radialgrundbohrungen oder die Radialgrundnut radial überragende, separate Winkelbegrenzer einsetzbar sind, und dass das am äußeren Lagerring angeordnete zweite Anschlagelement der Drehwinkelbegrenzungseinrichtung durch einen an der Innenmantelfläche des äußeren Lagerrings befestigten, sich zu den Radialgrundbohrungen bzw. der Radialgrundnut im inneren Lagerring erstreckenden Schwenkfinger gebildet wird, der mit den in die Radialgrundbohrungen bzw. in die Radialgrundnut eingesetzten Winkelbegrenzern in Anschlagverbindung steht.

Bevorzugte Ausgestaltungen und vorteilhafte Weiterbildungen des erfindungsgemäß ausgebildeten Wälzlagers werden in den Unteransprüchen beschrieben.

Danach ist es gemäß Anspruch 2 bei dem erfindungsgemäß ausgebildeten Wälzlager vorgesehen, dass es bevorzugt als Schrägrollenlager mit zwei Reihen in O-Anordnung zueinander angeordneten Wälzkörpern ausgebildet ist und dass die Anschlagelemente der Drehwinkelbegrenzungseinrichtung jeweils axial mittig zwischen den inneren beziehungsweise äußeren Laufbahnen der Lagerringe angeordnet sind. Als Wälzkörper für das Wälzlager haben sich dabei Nadel- oder Zylinderrollen oder auch Kegelrollen als besonders geeignet erwiesen. Denkbar wäre es jedoch auch, das Wälzlager als zweireihiges Schrägkugellager in O- oder X-Anordnung auszubilden. Ebenso ist auch eine axial außermittige Anordnung der Anschlagelemente der Drehwinkelbegrenzungseinrichtung zwischen oder einseitig neben den Laufbahnen der Lagerringe denkbar.

Nach Anspruch 3 ist es ein weiteres Merkmal des erfindungsgemäß ausgebildeten Wälzlagers, dass die in die Radialgrundbohrungen oder die Radialgrundnut im inneren Lagerring einsetzbaren Winkelbegrenzer durch ein oder zwei dem Durchmesser beziehungsweise der Breite der Radialgrundbohrungen oder der Radialgrundnut entsprechende Lagerkugeln gebildet werden. Möglich ist es jedoch auch, als Winkelbegrenzer ein oder zwei dem Durchmesser beziehungsweise der Breite der Radialgrundbohrungen oder der Radialgrundnut entsprechende Zylinderrollen zu verwenden, die mit einer ihrer Stirnseiten voran in die Radialgrundbohrungen oder der Radialgrundnut eingesetzt werden.

Gemäß Anspruch 4 ist das erfindungsgemäß ausgebildete Wälzlager darüber hinaus noch dadurch gekennzeichnet, dass der an der Innenmantelfläche des äußeren Lagerrings befestigte und sich zu den Radialgrundbohrungen bzw. der Radialgrundnut erstreckende Schwenkfinger durch einen in eine durchgehende Gewindebohrung im äußeren Lagerring eingeschraubten Gewindezapfen gebildet wird. Alternativ dazu kann als Schwenkfinger auch ein in eine Durchgangsbohrung eingepresster Passstift verwendet werden. Das Einschrauben des Gewindezapfens oder das Einpressen des Passstiftes erfolgt dabei derart, dass der Schwenkfinger die Innenmantelfläche des äußeren Lagerrings nur soweit überragt, dass er die Außenmantelfläche des Innenrings auf der Ebene der Radialgrundbohrungen bzw. der Radialgrundnut nicht berührt.

Ein weiteres Merkmal des erfindungsgemäß ausgebildeten Wälzlagers ist es nach Anspruch 5 des Weiteren, dass die in einer Reihe umlaufend nacheinander angeordneten Radialgrundbohrungen am inneren Lagerring eine Begrenzung des Drehwinkels in einem Bereich bis zu 320° ermöglichen und die zwischen der ersten Radialgrundbohrung und der letzten Radialgrundbohrung angeordnete Radialgrundnut für eine Begrenzung des Drehwinkels in einem Bereich bis zu 400° vorgesehen ist. Bei Anordnung von mehr oder weniger Radialgrundbohrungen nacheinander und/oder bei Variierung der Länge der Radialgrundnut sind jedoch auch kleinere oder größere Bereiche der Drehwinkelbegrenzung möglich.

Schließlich zeichnet sich das erfindungsgemäß ausgebildete Wälzlager nach den Ansprüchen 6 und 7 noch dadurch aus, dass für eine Begrenzung des Drehwinkels in einem Bereich bis zu 340° zwei Winkelbegrenzer in zwei entsprechend beabstandete Radialgrundbohrungen oder in eine Radialgrundbohrung und in die Radialgrundnut eingesetzt sind und der Schwenkfinger zwischen der einen Seite des einen Winkelbegrenzers und der anderen Seite des anderen Winkelbegrenzers beweglich ist. Für eine Begrenzung des Drehwinkels in einem Bereich zwischen 350° und 400° ist dagegen nur ein Winkelbegrenzer in eine der Radialgrundbohrungen oder in die Radialgrundnut eingesetzt, so dass sich der Schwenkfinger zwischen der einen und der anderen Seite des einen Winkelbegrenzers bewegen kann. Dabei wird ein in die Radialgrundnut eingesetzter Winkelbegrenzer durch den Schwenkfinger von einem Ende der Radialgrundnut zu deren anderen Ende verschoben.

Das erfindungsgemäß ausgebildete Wälzlager weist somit gegenüber den aus dem Stand der Technik bekannten Wälzlagern für eine Drehverbindung den Vorteil auf, dass es durch eine Vielzahl in einer Reihe an der Außenmantelfläche des inneren Lagerrings umlaufend nacheinander angeordneter, einzelner Radialgrundbohrungen und durch zumindest eine zwischen einer ersten Radialgrundbohrung und einer letzten Radialgrundbohrung angeordnete, langlochartige Radialgrundnut sowie durch einen an der Innenmantelfläche des äußeren Lagerrings befestigten, sich zu den Radialgrundbohrungen bzw. der Radialgrundnut im inneren Lagerring erstreckenden Schwenkfinger mit einer Einrichtung zur Drehwinkelbegrenzung größer 360° ausgebildet ist, die aus einfachen und bauraumsparenden Mitteln besteht und mit einem niedrigen Kostenaufwand herstellbar ist.

### Kurze Beschreibung der Zeichnungen

Eine bevorzugte Ausführungsform des erfindungsgemäß ausgebildeten Wälzlagers wird nachfolgend unter Bezugnahme auf die beigefügten Zeichnungen näher erläutert. Dabei zeigen:
- Figur 1: eine Seitenansicht eines erfindungsgemäß ausgebildeten Wälzlagers;
- Figur 2: den Querschnitt A - A durch das erfindungsgemäß ausgebildete Wälzlager nach Figur 1 ;
- Figur 3: eine Seitenansicht des Innenrings des erfindungsgemäß ausgebildeten Wälzlagers nach Figur 1 ;
- Figur 4: den Querschnitt C - C durch den Innenring des erfindungsgemäß ausgebildete Wälzlager nach Figur 3;
- Figur 5: den Teilschnitt B - B durch das erfindungsgemäß ausgebildete Wälzlager nach Figur 1 ;
- Figur 6: eine perspektivische Ansicht des Innenrings des erfindungsgemäß ausgebildeten Wälzlagers nach Figur 1;
- Figur 7: eine schematische Querschnittsansicht des Wälzlagers nach Figur 1 in einer Ausgangsposition, einer Mittelposition und einer Endposition des äußeren Lagerrings bei einer Drehwinkelverstellung um 400°.

### Ausführliche Beschreibung der Zeichnungen

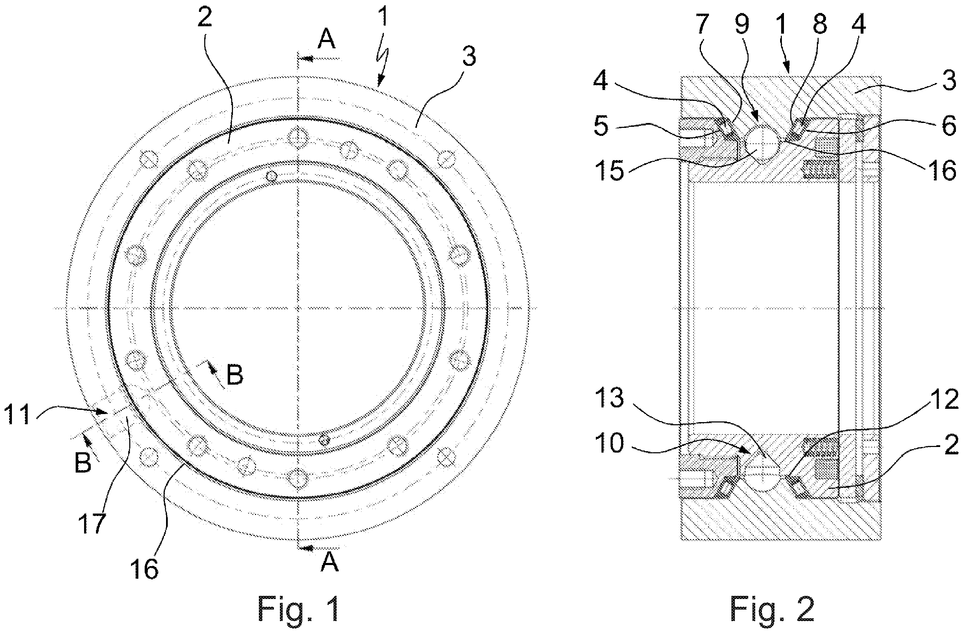

Aus den Figuren 1 und 2 geht deutlich ein als Drehverbindung in einem Deckenstativ geeignetes Wälzlager 1 hervor, welches als Schrägrollenlager ausgebildet ist und aus einem inneren Lagerring 2, einem äußeren Lagerring 3 und einer Vielzahl von Wälzkörpern 4 besteht, die als in zwei Reihen in O-Anordnung zueinander angeordnete Nadelrollen ausgebildet sind und zwischen den Lagerringen 2, 3 auf inneren und äußeren Laufbahnen 5, 6 und 7, 8 abrollen. In Figur 2 ist des Weiteren zu sehen, dass innerhalb des Wälzlagers 1 eine Drehwinkelbegrenzungseinrichtung 9 angeordnet ist, die das gegenseitige Verdrehen des inneren Lagerrings 2 gegenüber dem äußeren Lagerring 3 innerhalb eines Drehwinkelbereiches von 0° bis größer 360° begrenzt. Diese Drehwinkelbegrenzungseinrichtung 9 umfasst ein am inneren Lagerring 2 angeordnetes erstes Anschlagelement 10 sowie ein in Figur 1 angedeutetes und am äußeren Lagerring 3 angeordnetes zweites Anschlagelement 11, wobei beide Anschlagelemente 10, 11 jeweils axial mittig zwischen den inneren beziehungsweise äußeren Laufbahnen 5, 6 bzw. 7, 8 der Lagerringe 2, 3 angeordnet sind.

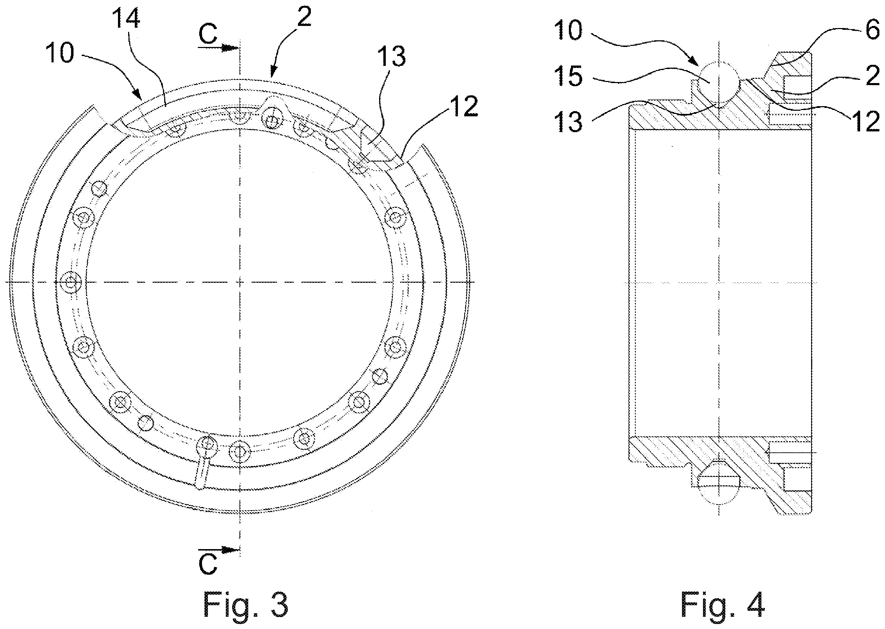

In den Figuren 3, 4 und 6 ist des Weiteren dargestellt, dass das am inneren Lagerring 2 angeordnete erste Anschlagelement 10 der Drehwinkelbegrenzungseinrichtung 9 durch eine Vielzahl in einer Reihe an der Außenmantelfläche 12 des inneren Lagerrings 2 umlaufend nacheinander angeordneter, einzelner Radialgrundbohrungen 13 sowie durch eine zwischen einer ersten Radialgrundbohrung 13a und einer letzten Radialgrundbohrung 13b angeordnete, langlochartige Radialgrundnut 14 gebildet wird, wobei in die Radialgrundbohrungen 13 oder die Radialgrundnut 14 je nach Größe des zu begrenzenden Drehwinkels ein oder zwei die Radialgrundbohrungen 13 oder die Radialgrundnut 14 radial überragende, separate Winkelbegrenzer 15 einsetzbar sind. Die Winkelbegrenzer 15 werden dabei deutlich sichtbar durch ein oder zwei Lagerkugeln gebildet, deren Durchmesser dem Durchmesser der Radialgrundbohrungen 13 beziehungsweise der Breite der Radialgrundnut 14 entsprechen.

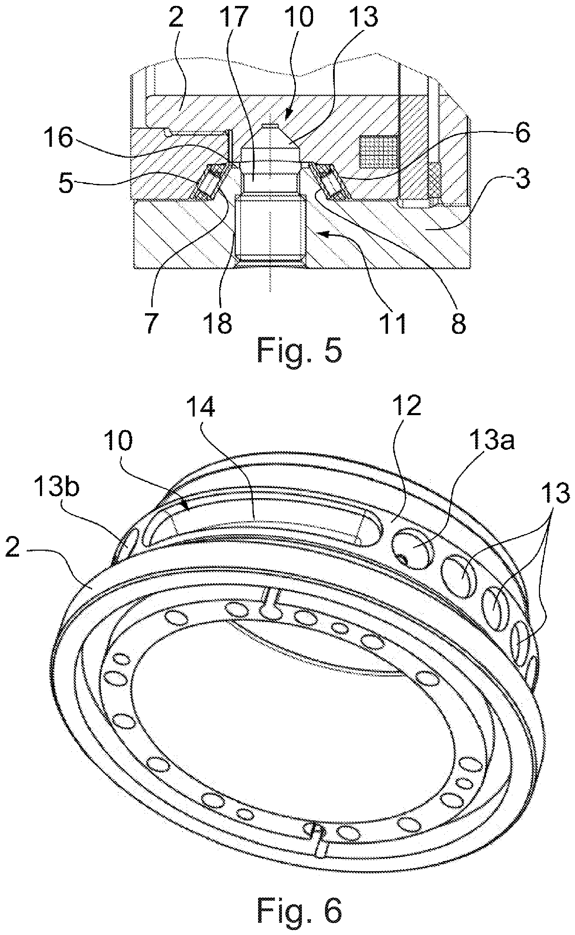

Das am äußeren Lagerring 3 angeordnete zweite Anschlagelement 11 der Drehwinkelbegrenzungseinrichtung 9 wird dem gegenüber durch einen in der Schnittdarstellung in Figur 5 sichtbaren an der Innenmantelfläche 16 des äußeren Lagerrings 3 befestigten Schwenkfinger 17 gebildet, der durch einen in eine durchgehende Gewindebohrung 18 im äußeren Lagerring 3 eingeschraubten Gewindezapfen gebildet wird. Dieser Schwenkfinger 17 erstreckt sich deutlich sichtbar zu den Radialgrundbohrungen 13 bzw. der Radialgrundnut 14 im inneren Lagerring 2 und steht mit den in die Radialgrundbohrungen 13 bzw. in die Radialgrundnut 14 eingesetzten Winkelbegrenzern 15 in Anschlagverbindung.

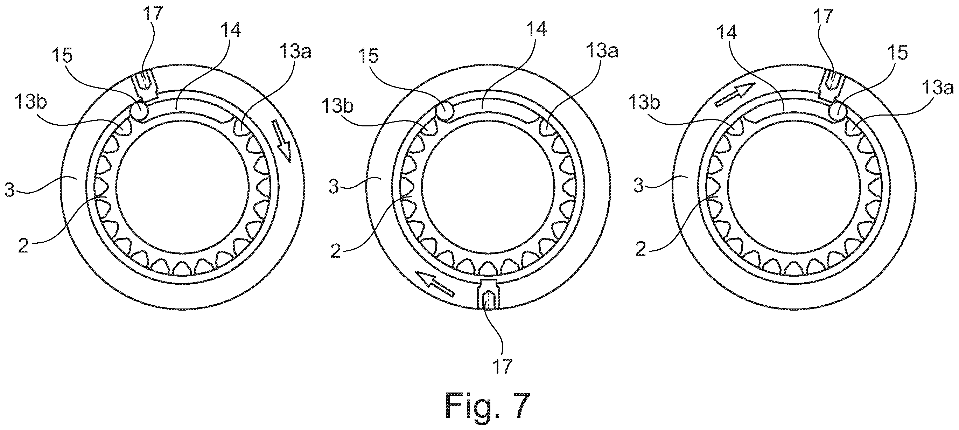

Durch die Figuren 6 und 7 wird außerdem deutlich, dass die in einer Reihe umlaufend nacheinander angeordneten Radialgrundbohrungen 13 am inneren Lagerring 2 eine Begrenzung des Drehwinkels in einem Bereich bis zu 320° ermöglichen und dass die zwischen der ersten Radialgrundbohrung 13a und der letzten Radialgrundbohrung 13b angeordnete Radialgrundnut 14 für eine Begrenzung des Drehwinkels in einem Bereich bis zu 400° vorgesehen ist. Für eine Begrenzung des Drehwinkels in einem Bereich bis zu 340° werden dabei zwei Winkelbegrenzer 15 in zwei entsprechend beabstandete Radialgrundbohrungen 13 oder in eine Radialgrundbohrung 13 und in die Radialgrundnut 14 eingesetzt, so dass der Schwenkfinger 17 zwischen der einen Seite des einen Winkelbegrenzers 15 und der anderen Seite des anderen Winkelbegrenzers 15 beweglich ist. Für eine Begrenzung des Drehwinkels in einem Bereich zwischen 350° und 400° wird dagegen nur ein Winkelbegrenzer 15 in eine der Radialgrundbohrungen 13 oder in die Radialgrundnut 14 eingesetzt, so dass der Schwenkfinger 17 zwischen der einen und der anderen Seite des einen Winkelbegrenzers 15 beweglich ist.

In den schematischen Querschnittsdarstellungen des Wälzlagers 1 in Figur 7 ist schließlich noch beispielhaft die Bewegung des Schwenkfingers 17 der Drehwinkelbegrenzungseinrichtung 9 beziehungsweise des äußeren Lagerrings 2 bei einer Drehwinkelverstellung um 400° dargestellt. Die linke Darstellung zeigt dabei die Ausgangsposition des Wälzlagers 1, bei der eine einzelne Lagerkugel als Winkelbegrenzer 15 in die Radialgrundnut 14 im feststehenden inneren Lagerring 2 so eingesetzt ist, dass diese am linken Ende der Radialgrundnut 14 anliegt und der als Gewindestift ausgebildete Schwenkfinger 17 am äußeren Lagerring 2 in einer 11-Uhr-Stellung die rechte Seite des Winkelbegrenzers 15 berührt.

Nach einer Verdrehung des äußeren Lagerrings 3 im Uhrzeigersinn um ca. 200° befindet sich der Schwenkfinger 17 am äußeren Lagerring 3 in einer der mittleren Darstellung der Figur 7 entsprechenden Mittelposition, die etwa einer 6-Uhr-Stellung entspricht.

Bei der weiteren Verdrehung des äußeren Lagerrings 3 schlägt der Schwenkfinger 17 dann bei einem Drehwinkel von etwa 350° an die linke Seite des Winkelbegrenzers 15 in der Radialgrundnut 14 an und verschiebt diesen innerhalb der Radialgrundnut 14 um weitere 50° von deren linken Ende zu deren rechten Ende in die in der rechten Darstellung der Figur 7 gezeigte Endposition, in der die Drehbewegung des äußeren Lagerrings 3 gegenüber dem inneren Lagerring bei einem Drehwinkel von insgesamt 400° beziehungsweise in einer 1-Uhr-Stellung gestoppt wird.

### Bezugszahlenliste

- 1: Wälzlager
- 2: innerer Lagerring
- 3: äußerer Lagerring
- 4: Wälzkörper
- 5: innere Laufbahn an 2
- 6: innere Laufbahn an 2
- 7: äußere Laufbahn an 3
- 8: äußere Laufbahn an 3
- 9: Drehwinkelbegrenzungseinrichtung
- 10: erstes Anschlagelement
- 11: zweites Anschlagelement
- 12: Außenmantelfläche von 2
- 13: Radialgrundbohrungen
- 13a: erste Radialgrundbohrung
- 13b: letzte Radialgrundbohrung
- 14: Radialgrundnut
- 15: Winkelbegrenzer
- 16: Innenmantelfläche von 3
- 17: Schwenkfinger

## Patentansprüche

1. Wälzlager (1), bestehend aus einem inneren Lagerring (2), einem äußeren Lagerring (3) und einer Vielzahl von Wälzkörpern (4), die zwischen den Lagerringen (2, 3) auf inneren und äußeren Laufbahnen (5, 6; 7, 8) abrollen, sowie mit einer innerhalb des Wälzlagers (1) angeordneten Drehwinkelbegrenzungseinrichtung (9), die das gegenseitige Verdrehen des inneren Lagerrings (2) gegenüber dem äußeren Lagerring (3) innerhalb eines Drehwinkelbereiches von 0° bis größer 360° begrenzt und zumindest ein am inneren Lagerring (2) angeordnetes erstes Anschlagelement (10) sowie wenigstens ein am äußeren Lagerring (3) angeordnetes zweites Anschlagelement (11) umfasst, wobei das am inneren Lagerring (2) angeordnete erste Anschlagelement (10) der Drehwinkelbegrenzungseinrichtung (9) durch eine Vielzahl in einer Reihe an der Außenmantelfläche (12) des inneren Lagerrings (2) umlaufend nacheinander angeordneter, einzelner Radialgrundbohrungen (13) sowie durch zumindest eine zwischen einer ersten Radialgrundbohrung (13a) und einer letzten Radialgrundbohrung (13b) angeordnete, langlochartige Radialgrundnut (14) gebildet wird, wobei in die Radialgrundbohrungen (13) oder die Radialgrundnut (14) je nach Größe des zu begrenzenden Drehwinkels ein oder zwei die Radialgrundbohrungen (13) oder die Radialgrundnut (14) radial überragende, separate Winkelbegrenzer (15) einsetzbar sind, und dass das am äußeren Lagerring (3) angeordnete zweite Anschlagelement (11) der Drehwinkelbegrenzungseinrichtung (9) durch einen an der Innenmantelfläche (16) des äußeren Lagerrings (3) befestigten, sich zu den Radialgrundbohrungen (13) bzw. der Radialgrundnut (14) im inneren Lagerring (2) erstreckenden Schwenkfinger (17) gebildet wird, der mit den in die Radialgrundbohrungen (13) bzw. in die Radialgrundnut (14) eingesetzten Winkelbegrenzern (15) in Anschlagverbindung steht.

2. Wälzlager (1) nach Anspruch 1, **dadurch gekennzeichnet, dass** es bevorzugt als Schrägrollenlager mit zwei Reihen in O-Anordnung zueinander angeordneten Wälzkörpern (4) ausgebildet ist und dass die Anschlagelemente (10, 11) der Drehwinkelbegrenzungseinrichtung (9) jeweils axial mittig zwischen den inneren beziehungsweise äußeren Laufbahnen (5, 6; 7, 8) der Lagerringe (2, 3) angeordnet sind.

3. Wälzlager (1) nach Anspruch 2, **dadurch gekennzeichnet, dass** die in die Radialgrundbohrungen (13) oder die Radialgrundnut (14) im inneren Lagerring (2) einsetzbaren Winkelbegrenzer (15) durch ein oder zwei dem Durchmesser beziehungsweise der Breite der Radialgrundbohrungen (13) oder der Radialgrundnut (14) entsprechende Lagerkugeln gebildet werden.

4. Wälzlager (1) nach Anspruch 3, **dadurch gekennzeichnet, dass** der an der Innenmantelfläche (16) des äußeren Lagerrings (3) befestigte und sich zu den Radialgrundbohrungen (13) bzw. der Radialgrundnut (14) erstreckende Schwenkfinger (17) durch einen in eine durchgehende Gewindebohrung (18) im äußeren Lagerring (3) eingeschraubten Gewindezapfen gebildet wird.

5. Wälzlager (1) nach Anspruch 4, **dadurch gekennzeichnet, dass** die in einer Reihe umlaufend nacheinander angeordneten Radialgrundbohrungen (13) am inneren Lagerring (2) eine Begrenzung des Drehwinkels in einem Bereich bis zu 320° ermöglichen und die zwischen der ersten Radialgrundbohrung (13a) und der letzten Radialgrundbohrung (13b) angeordnete Radialgrundnut (14) für eine Begrenzung des Drehwinkels in einem Bereich bis zu 400° vorgesehen ist.

6. Wälzlager (1) nach Anspruch 5, **dadurch gekennzeichnet, dass** für eine Begrenzung des Drehwinkels in einem Bereich bis zu 340° zwei Winkelbegrenzer (15) in zwei entsprechend beabstandete Radialgrundbohrungen (13) oder in eine Radialgrundbohrung (13) und in die Radialgrundnut (14) eingesetzt sind und der Schwenkfinger (17) zwischen der einen Seite des einen Winkelbegrenzers (15) und der anderen Seite des anderen Winkelbegrenzers (15) beweglich ist.

7. Wälzlager (1) nach Anspruch 5, **dadurch gekennzeichnet, dass** für eine Begrenzung des Drehwinkels in einem Bereich zwischen 350° und 400° nur ein Winkelbegrenzer (15) in eine der Radialgrundbohrungen (13) oder in die Radialgrundnut (14) eingesetzt ist und der Schwenkfinger (17) zwischen der einen und der anderen Seite des einen Winkelbegrenzers (15) beweglich ist, wobei ein in die Radialgrundnut (14) eingesetzter Winkelbegrenzer (15) durch den Schwenkfinger (17) von einem Ende der Radialgrundnut (14) zu deren anderen Ende verschiebbar ist.

## Claims

1. A rolling element bearing (1), consisting of an inner bearing ring (2), an outer bearing ring (3) and a plurality of rolling elements (4), which roll between the bearing rings (2, 3) on inner and outer raceways (5, 6; 7, 8), and an angle-of-rotation limiting device (9) arranged within the rolling element bearing (1), which angle-of-rotation limiting device limits the relative rotation between the inner bearing ring (2) and the outer bearing ring (3) within an angle-of-rotation range from 0° to greater than 360° and comprises at least one first stop element (10) arranged on the inner bearing ring (2) and at least one second stop element (11) arranged on the outer bearing ring (3), wherein the first stop element (10) of the angle-of-rotation limiting device (9), which first stop element is arranged on the inner bearing ring (2), is formed by a plurality of individual radial base bores (13) arranged in peripheral succession in a row on the outer lateral surface (12) of the inner bearing ring (2) and by at least one slotted-hole-type radial base groove (14) arranged between a first radial base bore (13a) and a last radial base bore (13b), wherein one or two separate angle limiters (15) protruding radially beyond the radial base bores (13) or the radial base groove (14) can be inserted into the radial base bores (13) or the radial base groove (14) depending on the size of the angle of rotation to be limited, and in that the second stop element (11) of the angle-of-rotation limiting device (9), which second stop element is arranged on the outer bearing ring (3), is formed by a pivoting finger (17), which is fastened to the inner lateral surface (16) of the outer bearing ring (3) and extends to the radial base bores (13) or the radial base groove (14) in the inner bearing ring (2) and is in stop connection with the angle limiters (15) inserted into the radial base bores (13) or into the radial base groove (14).

2. The rolling element bearing (1) according to claim 1, **characterised in that** it is preferably designed as an angular contact roller bearing with two rows of the rolling elements (4) arranged in an O arrangement relative to one another, and **in that** the stop elements (10, 11) of the angle-of-rotation limiting device (9) are each arranged axially centrally between the inner and outer raceways (5, 6; 7, 8), respectively, of the bearing rings (2, 3).

3. The rolling element bearing (1) according to claim 2, **characterised in that** the angle limiters (15) that can be inserted into the radial base bores (13) or the radial base groove (14) in the inner bearing ring (2) are formed by one or two bearing balls corresponding to a diameter or a width of the radial base bores (13) or the radial base groove (14).

4. The rolling element bearing (1) according to claim 3, **characterised in that** the pivoting finger (17) fastened to the inner lateral surface (16) of the outer bearing ring (3) and extending to the radial base bores (13) or the radial base groove (14) is formed by a threaded pin screwed into a continuous threaded bore (18) in the outer bearing ring (3).

5. The rolling element bearing (1) according to claim 4, **characterised in that** the radial base bores (13) arranged in peripheral succession in the row on the inner bearing ring (2) enable limitation of the angle of rotation in a range of up to 320° and the radial base groove (14) arranged between the first radial base bore (13a) and the last radial base bore (13b) is provided for limitation of the angle of rotation in a range of up to 400°.

6. The rolling element bearing (1) according to claim 5, **characterised in that** for limiting the angle of rotation in a range of up to 340°, two angle limiters (15) are inserted in two correspondingly spaced apart radial base bores (13) or in one radial base bore (13) and in the radial base groove (14), and the pivoting finger (17) can be moved between one side of an angle limiter (15) and the other side of the other angle limiter (15).

7. The rolling element bearing (1) according to claim 5, **characterised in that** for limiting the angle of rotation in a range of between 350° and 400°, only one angle limiter (15) is inserted into one of the radial base bores (13) or into the radial base groove (14), and the pivoting finger (17) can be moved between one end and the other end of the one angle limiter (15), wherein an angle limiter (15) inserted into the radial base groove (14) can be displaced by the pivoting finger (17) from one end of the radial base groove (14) to the other end thereof.

## Revendications

1. Palier à roulement (1), constitué d'une bague de roulement intérieure (2), d'une bague de roulement extérieure (3) et d'une pluralité d'éléments roulants (4), qui roulent entre les bagues de roulement (2, 3) sur des chemins de roulement intérieurs et extérieurs (5, 6 ; 7, 8), et comportant un dispositif de limitation d'angle de rotation (9) agencé à l'intérieur du palier à roulement (1), qui limite la rotation mutuelle de la bague de roulement intérieure (2) par rapport à la bague de roulement extérieure (3) dans une plage d'angle de rotation de 0° à plus de 360° et au moins un premier élément de butée (10) agencé sur la bague de roulement intérieure (2) ainsi qu'au moins un second élément de butée (11) agencé sur la bague de roulement extérieure (3), le premier élément de butée (10) du dispositif de limitation d'angle de rotation (9) agencé sur la bague de roulement intérieure (2) étant constitué d'une pluralité d'alésages de base radiaux individuels (13) agencés les uns après les autres en continu de manière rangée sur la surface d'enveloppe extérieure (12) de la bague de roulement intérieure (2) ainsi qu'au moins une rainure de base radiale en forme de fente (14) agencée entre un premier alésage de base radial (13a) et un dernier alésage de base radial (13b), un ou deux limiteurs d'angle (15) séparés dépassant radialement au-delà des alésages de base radiaux (13) ou de la rainure de base radiale (14) pouvant être insérés dans les alésages de base radiaux (13) ou la rainure de base radiale (14), en fonction de la taille de l'angle de rotation à limiter, et en ce que le second élément de butée (11) du dispositif de limitation d'angle de rotation (9) agencé sur la bague de roulement extérieure (3) est constitué d'un doigt pivotant (17) s'étendant dans la bague de roulement intérieure (2) jusqu'aux alésages de base radiaux (13) ou la rainure de base radiale (14), fixé sur la surface d'enveloppe intérieure (16) de la bague de roulement extérieure (3), lequel doigt est en liaison de butée avec les limiteurs d'angle (15) insérés dans les alésages de base radiaux (13) ou dans la rainure de base radiale (14).

2. Palier à roulement (1) selon la revendication 1, **caractérisé en ce qu'**il est de préférence réalisé comme roulement à rouleaux obliques avec deux rangées d'éléments roulants (4) agencés en O l'un par rapport à l'autre et **en ce que** les éléments de butée (10, 11) du dispositif de limitation d'angle de rotation (9) sont chacun centrés axialement entre les chemins de roulement intérieurs ou extérieurs (5, 6 ; 7, 8) des bagues de roulement (2, 3).

3. Palier à roulement (1) selon la revendication 2, **caractérisé en ce que** les limiteurs d'angle (15) pouvant être insérés dans les alésages de base radiaux (13) ou dans la rainure de base radiale (14) de la bague de roulement intérieure (2) sont formés par une ou deux billes de roulement correspondant au diamètre ou à la largeur des alésages de base radiaux (13) ou de la rainure de base radiale (14).

4. Palier à roulement (1) selon la revendication 3, **caractérisé en ce que** le doigt pivotant (17) fixé sur la surface d'enveloppe intérieure (16) de la bague de roulement extérieure (3) et s'étendant jusqu'aux alésages de base radiaux (13) ou à la rainure de base radiale (14) est formé par une tige filetée vissée dans un alésage fileté traversant (18) dans la bague de roulement extérieure (3).

5. Palier à roulement (1) selon la revendication 4, **caractérisé en ce que** les alésages de base radiaux (13) agencés les uns après les autres en continu dans une rangée sur la bague de roulement intérieure (2) permettent de limiter l'angle de rotation dans une plage allant jusqu'à 320° et la rainure de base radiale (14) agencée entre le premier alésage de base radial (13a) et le dernier alésage de base radial (13b) est prévue pour limiter l'angle de rotation dans une plage allant jusqu'à 400°.

6. Palier à roulement (1) selon la revendication 5, **caractérisé en ce que** pour limiter l'angle de rotation dans une plage allant jusqu'à 340°, deux limiteurs d'angle (15) sont insérés dans deux alésages de base radiaux (13) espacés de manière correspondante ou dans un alésage de base radial (13) et dans la rainure de base radiale (14) et le doigt pivotant (17) est mobile entre un côté d'un limiteur d'angle (15) et l'autre côté de l'autre limiteur d'angle (15).

7. Palier à roulement (1) selon la revendication 5, **caractérisé en ce que** pour limiter l'angle de rotation dans une plage entre 350° et 400°, un seul limiteur d'angle (15) est inséré dans l'un des alésages de base radiaux (13) ou dans la rainure de base radiale (14) et le doigt pivotant (17) est mobile entre l'un et l'autre côté du limiteur d'angle (15), un limiteur d'angle (15) inséré dans la rainure de base radiale (14) pouvant être déplacé par le doigt pivotant (17) d'une extrémité de la rainure de base radiale (14) à son autre extrémité.
